# EUROPEAN PATENT SPECIFICATION

(11) **EP 3 081 099 B1**
(45) Date of publication and mention of the grant of the patent: **09.10.2019**
(21) Application number: 15163563.8
(22) Date of filing: 14.04.2015
(51) Int. Cl.: A24F 23/02, A45C 3/00, B29C 65/00, B29C 65/02, B29C 65/08, B29C 65/48, B29L 31/00

(54) **TOBACCO POUCH WITH PRINTED ELEMENT**
TABAKBEUTEL MIT GEDRUCKTEM ELEMENT
BLAGUE À TABAC AVEC ÉLÉMENT IMPRIMÉ

(43) Date of publication of application: 19.10.2016
(73) Proprietor: Reemtsma Cigarettenfabriken GmbH, 22761 Hamburg (DE)
(72) Inventor: Cooper, Edward, 22761 Hamburg (DE)
(74) Representative: Gulde & Partner

(56) References cited:
- GB-A- 599 921
- US-A- 3 394 870
- US-A- 3 447 428

## Description

Tobacco pouches serve the purpose of storing loose tobacco in order to roll individual cigarettes from it, if required. These days, tobacco pouches are produced by machine in large quantities from a flexible flat material, like e.g. polymer film.

A tobacco pouch is conventionally formed from a rectangular sheet of a flexible flat material folded over itself and welded together at the edges to form a main compartment to house tobacco. A portion of the rectangular sheet extending beyond the opening of the main compartment may be folded over the main compartment to form a closing flap. Such pouches can be filled with tobacco, sealed and wrapped for sale to the consumer.

Usually, such tobacco pouches comprise one or more printed elements on an outside surface of the flexible flat material such that the printed element is visible from the outside of the main compartment of the pouch. Such printed elements may comprise text, pictures or other visual elements. The printed elements can be used e.g. for communication with the consumer.

During the production of such tobacco pouches it may occur that two outside surfaces of the flexible flat material will be permanently sealed together to form a seam of the pouch, e.g. in order to arrange additional compartments within the pouch. Exemplary embodiments of such pouches are described in WO 2015/132104 A.

However, the presence of a printed element on an outside surface of the flexible flat material to be sealed can impair the sealing properties of the flexible flat material. Thus, if at least one of the two outside surfaces of the flexible flat material to be permanently sealed comprises a printed element, manufacturing in an industrial scale may lead to a considerable amount of deficient pouches due to seams which do not fully comply with all quality parameters.

A tobacco pouch according to the preamble of claim 1 is disclosed in US 3 447 428 A. It is an object of the present invention to provide a tobacco pouch with a printed element which can be produced efficiently at an industrial scale.

The present invention provides a tobacco pouch comprising a main compartment to house tobacco, the pouch being made of a flexible flat material with an inner surface facing the interior of the main compartment and an outer surface facing the exterior of the main compartment, wherein the flexible flat material comprises one or more printed element(s) visible from the exterior of the main compartment, and wherein two outside surfaces of the flexible flat material are permanently sealed together to form a seam of the pouch. In the pouch of the present invention, the flexible flat material comprises or consists of a laminate of a plurality of polymer layers, wherein the laminate comprises or consists of:
an opaque inner layer;
a transparent outer layer;
one or more additional layers, wherein said one or more additional layers are each independently arranged between the opaque inner layer and the transparent outer layer and wherein the one or more additional layers each independently comprises or consists of polyethylene (PE), metallized polyethylene terephthalate (MPET), polypropylene (PP), cast polypropylene (CPP) or oriented polypropylene (OPP); and
one or more printed element(s) arranged on or between an inward surface of the transparent outer layer and an outward surface of the opaque inner layer.

Preferably, the outermost surface of the laminate or flexible flat material of the tobacco pouch of the present invention is free of any printed elements.

With regard to the definition of the laminate, the term "inner" as used herein means that the respective layer is located towards the interior of the main compartment relative to another, "outer" layer, e.g. relative to the transparent outer layer which preferably represents the outermost layer of the laminate.

By using the laminate defined herein, the resulting tobacco pouch of the present invention allows for formation of strong seams irrespective whether the flexible flat material sealed together comprises one or more printed element(s) visible from the exterior of the main compartment of the pouch or not. Preferably a strong seam is characterized by a force of at least 5N to break a seam with a seal width of 5mm, preferably of at least 10N to break a seam with a seal width of 5mm tested according to industry standard technology on a Zwick tension apparatus (e.g. T-peel test). Basis of the test is that 15mm sections (perpendicular to seal) of material are cut out from a sample. The two ends are then pulled apart at 180 degrees from one another, pealing the seam apart. A measure of the pulling force is maintained and the point of breaking is recorded. This test allows a direct comparison in strength of seams between different materials and sealing methods.

In the pouch of the invention, printed elements are sandwiched between the innermost surface and the outermost surface of the flexible flat material used for the pouch. The laminate of the tobacco pouch of the invention ensures adequate sealability by providing an outermost surface which is free from any printed element and is, thus, available for sealing without any potential impairment due to printed elements. At the same time visibility of any printed element from the outside of the main compartment of the pouch is ensured since the outer layer of the laminate is made transparent.

In the pouch of the invention two outside surfaces of the flexible flat material are permanently sealed together to form a seam of the pouch. Said seam of the pouch can be formed by conventional sealing techniques like e.g. heat sealing, pressure sealing, ultrasonic sealing, adhesive sealing and combinations thereof. In a preferred embodiment, said seam of the pouch is prepared by heat sealing, ultrasonic sealing or a combination thereof.

The pouch of the present invention can be produced by using conventional machinery simply by replacing the usual flexible flat material with the laminate defined herein.

The pouch can be formed simply from a first rectangular sheet of flexible flat material on which a main compartment is provided by adhesively bonding a second smaller rectangle of similar material along three of its edges to the first sheet. Preferably, however, the pouch is formed from a blank comprising a rectangular sheet of flexible flat material by folding over the sheet on itself and welding together the overlapping edges to form a main compartment. The flexible flat material comprises a printed element which will be visible from the outside of the main compartment of the pouch.

In a second step, part of the main compartment may be folded over itself and sealed along two opposing edges to form a second compartment. By doing so, two outside surfaces of the flexible flat material are permanently sealed together to form a seam of the pouch.

Alternatively, the pouch is formed from a single blank comprising a rectangular sheet of flexible flat material by folding over the sheet on itself to form a main compartment, folding over again to form a second compartment and welding together the overlapping edges. The flexible flat material comprises a printed element which will be visible from the outside of the main compartment of the pouch. By doing so, two outside surfaces of the flexible flat material are permanently sealed together to form a seam of the pouch.

The portion of the original blank extending beyond the opening of the main compartment forms a flap which can then be folded over the main compartment.

The main compartment of the pouch is preferably defined by a front panel and a back panel, wherein one or both of the front and back panel is made of the laminate.

The tobacco pouch of the invention can be made of one or more sheets of flexible flat material, wherein the flexible flat material of the at least one sheet, of more than one, or of all sheets comprises or consists of the laminate of the invention. Preferably the pouch is made of a single blank which comprises or consists of the laminate defined herein.

The flexible flat material of the pouch of the invention comprises or consists of a laminate of a plurality of polymer layers. The laminate comprises or consists of an opaque inner layer and a transparent outer layer. The opaque inner layer is arranged towards the inner surface of the flexible flat material, whereas the transparent outer layer is arranged towards the outer surface of the flexible flat material, respectively.

A printed element is arranged on or between an inward surface of the transparent outer layer and an outward surface of the opaque inner layer. This arrangement ensures that the printed element is embedded between the opaque inner and transparent outer layer of the laminate and, thus, has no impact on any seam formed by sealing two outside surfaces of the laminate together. Since the outer layer is transparent, it is ensured that the printed element is visible from the exterior of the main compartment of the pouch. Such printed element(s) may comprise text, pictures and/or other visual elements. The skilled person is well aware of materials and techniques commonly used to print elements on polymer layers. The present invention is not limited to a certain method of printing elements on polymer layers; however suitable methods of printing elements on polymer layers include rotogravure, flexoprint and digital printing.

The opaque inner layer of the laminate preferably comprises or consists of the polymers polyethylene (PE) or metallized polyethylene terephthalate (MPET). Both polymeric materials are well known in the art and have been used previously in the manufacture of flexible flat material for the preparation of pouches.

The opaque inner layer has a thickness which ensures that the layer is flexible and opaque for visible light, wherein opaque means a light transmission of 35% or less, preferably of 10% or less, more preferably, in case the flexible flat material comprises printed elements on both sides, of 5% or less. Preferably, the opaque inner layer has a thickness of 5 to 150µm, more preferably of 20 to 100µm, even more preferably of 60 to 80µm. If the opaque inner layer is formed of MPEP, the thickness is preferably within the range of 5 to 50µm, wherein a preferred range of thickness for an opaque inner layer formed of PE is 20 to 100µm.

The transparent outer layer of the laminate preferably comprises or consists of the polymers polyethylene (PE), polypropylene (PP), cast polypropylene (CPP) or oriented polypropylene (OPP). Said polymeric materials are well known in the art and have been used previously in the manufacture of flexible flat material for the preparation of pouches.

The transparent outer layer has a thickness which ensures that the layer is flexible and transparent for visible light, wherein transparent means a light transmission of 50% or greater, preferably of 70% or greater, more preferably of 90% or greater. Preferably, the transparent outer layer has a thickness of 5 to 150µm, more preferably of 20 to 100µm, even more preferably of 20 to 80µm.

The laminate of the flexible flat material of the pouch comprises further layers in addition to the opaque inner layer and the transparent outer layer. It is preferable that the transparent outer layer represents the outermost layer of the laminate. Preferably, one, more or all of said additional layers are transparent.

Said one or more additional layers each independently can be arranged between the opaque inner layer and the transparent outer layer or on an inward surface of the opaque inner layer, respectively. A printed element may be arranged on one of the surfaces of one of the additional layers, provided that no printed element is present on the innermost and outermost surfaces of the laminate.

Further, if the laminate comprises one or more printed elements between the opaque inner layer and the transparent outer layer which are not formed on the inward surface of the transparent outer layer, the additional layer(s), if any, which are arranged between said printed element(s) and the transparent outer layer are also formed transparent.

The additional layers each independently comprise or consist of polyethylene (PE), metallized polyethylene terephthalate (MPET), polypropylene (PP), cast polypropylene (CPP) or oriented polypropylene (OPP). The additional layer can have a thickness of 5 to 150µm, more preferably of 10 to 100µm, even more preferably of 10 to 80µm.

It is e.g. possible that the laminate comprises additional layers, wherein one or more additional layers are arranged between the opaque inner layer and the transparent outer layer and wherein a printed element is arranged on at least one of the surfaces of said additional layers.

Alternatively, it is also possible that the laminate comprises additional layers, wherein at least one additional layer is arranged on an inward surface of the opaque inner layer, preferably said additional layer is transparent. In this configuration, it is possible to have a printed element formed on or between an inward surface of the transparent outer layer and an outward surface of the opaque inner layer and a second printed element arranged on or between an inward surface of the opaque inner layer and an outward surface of said at least one transparent additional layer. So the laminate comprises two printed elements on opposing sides, visually separated by the opaque inner layer and covered by a transparent polymer layer. Thereby, both the interior and the exterior of the main compartment of the pouch are available for communication with the customer.

Preferably, the innermost layer of the laminate comprises or consists of PE. Since there is no significant chemical interaction between loose tobacco and PE, it is beneficial to ensure that the inner lining of the main compartment is made from PE.

In order to provide a laminate which is easy to process and can readily replace traditional flexible flat material of tobacco pouches on the same machinery, it is beneficial to limit the overall thickness of the laminate to 300µm or less, preferably to 200µm or less, even more preferably to 180µm to 20µm.

Exemplary embodiments of the laminate of the pouch of the present invention comprise or consist of the following alternatives:
- an opaque inner layer comprising or consisting of PE with a thickness of 80 to 100µm, a transparent outer layer comprising or consisting of PE with a thickness of 20 to 50µm and a printed element arranged on or between an inward surface of the transparent outer layer and an outward surface of the opaque inner layer;
- an opaque inner layer comprising or consisting of PE with a thickness of 20 to 100µm, a transparent outer layer comprising or consisting of CPP with a thickness of 30 to 80µm, and a printed element arranged on or between an inward surface of the transparent outer layer and an outward surface of the opaque inner layer;
- an opaque inner layer comprising or consisting of PE with a thickness of 20 to 100µm, a transparent outer layer comprising or consisting of OPP with a thickness of 20 to 80µm, and a printed element arranged on or between an inward surface of the transparent outer layer and an outward surface of the opaque inner layer;
- an opaque inner layer comprising or consisting of PE with a thickness of 20 to 60µm, a transparent outer layer comprising or consisting of PE with a thickness of 20 to 60µm, an additional layer arranged between the opaque inner layer and the transparent outer layer comprising or consisting of OPP with a thickness of 10 to 80µm, and a printed element arranged on or between an inward surface of the transparent outer layer, an outward surface of the opaque inner layer, and a surface of the additional layer;
- an opaque inner layer comprising or consisting of MPET with a thickness of 5 to 50µm, a transparent outer layer comprising or consisting of CPP with a thickness of 20 to 60µm, an additional layer arranged on an inward surface of the opaque inner layer comprising or consisting of PE with a thickness of 20 to 60µm, and a printed element arranged on or between an inward surface of the transparent outer layer and an outward surface of the opaque inner layer; or
- an opaque inner layer comprising or consisting of MPET with a thickness of 5 to 50µm, a transparent outer layer comprising or consisting of CPP with a thickness of 20 to 60µm, an additional layer arranged on an inward surface of the opaque inner layer comprising or consisting of PE with a thickness of 20 to 60µm, the additional layer being transparent, a printed element arranged on or between an inward surface of the transparent outer layer and an outward surface of the opaque inner layer, and a second printed element arranged on or between an inward surface of the opaque inner layer and an outward surface of the transparent additional layer.

If there are one or more additional layers present between the printed element and the inward surface of the transparent outer layer, these one or more additional layers are preferably formed as transparent layers in order to ensure visibility of the printed element from the exterior of the main compartment of the pouch.

The laminate of the invention can be used for any type of tobacco pouch wherein two outside surfaces of a flexible flat material are permanently sealed together to form a seam of the pouch. Preferably, the laminate of the invention is used for the tobacco pouch as defined herein below and disclosed in WO 2015/132104 A.

Preferably, the tobacco pouch according to the invention made of flexible flat material comprising or consisting of the laminate of the invention has a front panel and a back panel, which are folded against each other at the lower edge around a first lower folding line and are connected with each other at the two lateral edges and comprise a main compartment for tobacco, which is accessible from the outside through a main compartment opening between the upper edges of the front panel and the back panel, a first wrapping flap connected with the upper edge of the back panel and foldable towards the front panel around a first upper folding line, characterized by at least one arrangement of a first panel and a second panel, which are folded against each other around a second lower folding line on its lower edge and are connected with each other at the two lateral edges and comprise a secondary compartment for utensils, which is accessible from the outside through a secondary compartment opening between the upper edges of the first panel and the second panel and which is arranged on the inside or the outside of the front panel or of the back panel.

In the case of the tobacco pouch according to the invention, the secondary compartment is located on the inside or the outside of the front panel or of the back panel but not on the wrapping flap. As a result, the secondary compartment is accessible as easily as the main compartment. As the second compartment opening is provided between the upper edges of the first panel and the second panel, dropping out of utensils from the secondary compartment is prevented, when the main compartment opening faces upwards. Opening and closing of the wrapping flap does not change the position of the secondary compartment opening and does not cause dropping out of utensils.

According to a further embodiment, the secondary compartment is located on the inside of the front panel or on the inside or the outside of the back panel. According to a further embodiment, the secondary compartment is located on the inside of the front panel and a further secondary compartment is located on the inside or the outside of the back panel. As the secondary compartment does not cover the front panel, a printed element on the outside of the front panel is not disturbed by the secondary compartment. According to an alternative, the secondary compartment is located on the outside of the front panel and covers the front panel entirely so that a printed element on the outside of the compartment is not disturbed. According to a further alternative, the secondary compartment covers the front panel only partly and a printed element on the front panel is continued on the outside of the secondary compartment.

The secondary compartment may be used for storing utensils such as cigarette paper, cigarette paper booklets, lighters, filter tips, bank notes or other articles.

According to a further embodiment, the front panel, the back panel and the first and second panels of the secondary compartment are connected with each other on the two lateral edges by seams, especially by sealing. Seams can be prepared by various methods known in the art like e.g. heat sealing, pressure sealing, ultrasonic sealing, adhesive sealing and combinations thereof. A particularly easy production of the tobacco pouch is hereby enabled.

According to a further embodiment, the first panel of the secondary compartment is connected with the upper edge of the front panel via a second upper folding line. This enables the production of the tobacco pouch from a one-piece blank of foldable flat material. According to another embodiment, the first panel of the secondary compartment is connected with the upper edge of the back panel via a second upper folding line, wherein the secondary component is arranged either on the inside or on the outside of the back panel. This also enables the production of the tobacco pouch from a one-piece blank of foldable flat material comprising or consisting of the laminate of the invention. Alternatively, the tobacco pouch is formed from several blanks of foldable material, e.g. in that the front panel, the back panel and the first wrapping flap are formed from a first blank of foldable material and the first and the second panel of the secondary compartment from a second blank of foldable material. The two blanks can be interconnected through folding, laying them on top of each other and edge-side sealing.

According to a further embodiment, several secondary compartments are formed through several arrangements of overlapping first and second panels, wherein the first and second panels of each arrangement are connected with each other on the lower edge through a second lower folding line and neighboring first and second panels of different arrangements on the upper edge are connected with each other through a second upper folding line. This enables a particularly simple design of several secondary compartments.

According to one embodiment, the main compartment opening and the second compartment opening are arranged on the same level. According to a further embodiment, the secondary compartment opening is arranged offset with respect to the height of the main compartment opening. The access to tobacco and utensils is hereby facilitated and the risk that they will get into the wrong compartment is reduced.

According to a further embodiment, the secondary compartment openings of several secondary compartments are offset in terms of their heights. Through the height-offset arrangement of the secondary compartment openings, the access to the utensils is facilitated and the risk that they get into the wrong compartment is reduced.

According to a further embodiment, at least one first openable fastener is present at the main compartment opening and/or at least one second openable fastener is present at the secondary compartment opening for the closing of the secondary compartment opening. According to a further embodiment, several first openable fasteners are present at different heights in the main compartment and/or several second openable fasteners are present at different heights in the secondary compartment for dividing the main compartment and/or the secondary compartment into several openable partitions.

According to a further embodiment, the first fastener and/or the second fastener are not reclosable.

According to a further embodiment, the first fastener is a reclosable fastener and/or the second fastener is a reclosable fastener.

The first fastener and/or the second fastener is preferably a sealed seam or an adhesive seam or a zip fastener or a Velcro fastener or a micro suction structure.

The zip fastener is preferably a plastic zip. Suitable plastic zips, which are suitable for use in the present invention, are described in EP 1 017 593 B1, which is incorporated herein by reference. Velcro fasteners, which are suitable for use in the present invention, are marketed under the brand name "Velcro ®" by the company Velcro GmbH. Micro suction structures, which are suitable for use in the present invention, are marketed under the brand name "Yupo Tako ®" by the company Yupo Europe GmbH.

A sealed seam and an adhesive seam and an embossing seam and a stitching seam serve preferably to produce a non-reclosable first fastener and/or second fastener. A reclosable first fastener and/or second fastener is preferably a zip fastener or a Velcro fastener or a micro suction structure.

An openable and non-reclosable first fastener and/or second fastener serve in particular as freshness seal or as tamper-evident fastener. A reclosable first fastener and/or second fastener serves in particular to avoid the loss of tobacco or utensils and can also prevent the tobacco from losing moisture and flavourings.

According to a further embodiment, the heights of first fastener and the second fastener are offset. Through the height-offset arrangement of the first fastener and second fastener, material accumulations are avoided, which can make it harder to produce and use the tobacco pouch.

According to a further embodiment, the first fastener is fastened (a) on the insides of the second panel and of the back panel or (b) on the insides of the upper front panel and of the first wrapping flap or (c) on the insides of the second panel and of the front panel or (d) on the insides of the first panel and of the back panel.

According to a further embodiment, a secondary compartment and/or the main compartment arranged on the inside of the front panel or of the back panel on the lower edge is connected with the front panel or the back panel. This prevents tobacco from accumulating between the secondary compartment and the front panel or the back panel. The secondary panel on the lower edge is preferably connected with the front panel or the back panel through sealing to form a seam. E. g. the vertically extending seam is an exclusively vertical extending seam or an inclined seam. Further, the seam is e. g. straight or curved.

According to a further embodiment, the secondary compartment is divided in at least two partitions by at least one vertically extending seam.

According to a further embodiment, the first wrapping flat at the outer edge has a second wrapping flap, which is foldable towards the outside of the back panel.

According to a further embodiment, a tertiary compartment is defined by the first panel, the front panel and the connection between the secondary compartment and the front panel, the tertiary compartment being accessible through a tertiary compartment opening within the front panel. The tertiary compartment is accessible as easy as the main compartment and the secondary compartment. As the tertiary compartment opening is provided within the front panel, dropping out of utensils from the tertiary compartment is prevented when the first wrapping flap is folded towards the front panel. The tertiary compartment may be used for storing utensils such as a cigarette paper, cigarette paper booklets, filter pieces, lighters, bank notes etc.

Advantageously, the connection between the secondary compartment and the front panel defines the bottom of the tertiary compartment and at the same time prevents tobacco from accumulating between the secondary compartment and the front panel. According to a preferred embodiment, the bottom of the tertiary compartment is defined by a continuous sealing seam.

According to a further embodiment, the tertiary compartment opening comprises a horizontal slit. Length and width of the horizontal slits are preferably adapted to the articles to be inserted into respectively withdrawn from the tertiary compartment through the horizontal slit, especially to the length and thickness of the articles.

According to a further embodiment, the tertiary compartment opening comprises at least one vertical slit. The length and the width of the vertical slit is preferably adapted to the height of the articles to be inserted into and extracted from the tertiary compartment through the vertical slit.

According to a preferred embodiment, the tertiary compartment opening comprises a horizontal slit and at least one vertical slit beneath the horizontal slit. The vertical slit may be used for an inserting a booklet comprising cigarette paper into the tertiary compartment and the horizontal slit may be used for extracting single cigarette papers from the booklet within the tertiary compartment. Preferably, vertical slits are arranged on both sides of the horizontal slit.

The sealed seams are preferably manufactured in that two film materials are fused together through the use of an increased temperature and from pressure at least on the surface and subsequently being cooled again. Through suitable selection of temperature, pressure and dimensions, fixed sealed seams can be produced permanently, for example at both lateral edges of the tobacco pouch. Furthermore, it is possible to select temperature, pressure and dimensions such that bonds that can be broken open are established, for example in the case of the sealed seams at the main compartment opening or at the secondary compartment opening.

According to one embodiment, one or more folding lines of the tobacco pouch are sharp lines, which are formed through impression into the flexible flat material or bending of the flat material. Furthermore, it is possible that one or more folding lines of the tobacco pouch are bending lines, which are formed through the bending of neighboring sections of the flat material around a line without impressing or bending the flat material along the line.

Preferred dimensions of the tobacco pouch are as follows:
Length at least 5 cm and height at least 3 cm and/or length at most 20 cm and height at most 12 cm. Preferred embodiments have a length of 8 cm and a height of 5 cm or a length of 13,5 cm and a height of 8,2 cm or a length of 8,8 cm and a height of 8,8 cm.

According to an embodiment, the front panel and the back panel are rectangular. According to another embodiment, the front panel and the back panel are quadratic.

According to a further embodiment, the width of the secondary compartment is 40 - 200 mm and/or the height of the secondary compartment is 10 - 100 mm.

In the present application, the terms "top" and "bottom" , "upper" and "lower", "horizontal" and "vertical" as well as words derived from them refer to an alignment of the tobacco pouch, in which the main compartment opening is arranged above the lower edges of the front panel and the back panel.

The invention is explained in greater detail below based on the accompanying drawings of exemplary embodiments.

### FIGURES:

The drawings show:
- Fig. 1: a blank for a tobacco pouch of the invention according to a first design spread flat in a top view;
- Fig. 2: the blank during folding of the tobacco pouch;
- Fig. 3: the blank in an advanced state during folding of the tobacco pouch;
- Fig. 4: the folded finished tobacco pouch with open first wrapping flap;
- Fig. 5: the tobacco pouch in the same state as in Fig. 4 in a roughly schematic vertical cut;
- Fig. 6: the tobacco pouch in the closed state in a roughly schematic vertical cut;
- Fig. 7: another exemplary embodiment of the tobacco pouch of the invention with plastic zip on the upper edge of the back panel in the opened state in a roughly schematic vertical cut;
- Fig. 8: a further exemplary embodiment of the tobacco pouch of the invention with several secondary compartments on the inside of the front panel in the opened state in a roughly schematic vertical cut;
- Fig. 9: a further exemplary embodiment of the tobacco pouch of the invention with a secondary compartment on the outside of the back panel in the opened state in a roughly schematic vertical cut;
- Fig. 10: a blank for a tobacco pouch of the invention according to another embodiment spread flat in a top view;
- Fig. 11: the blank during folding of the tobacco pouch;
- Fig. 12: the blank in an advanced state during folding of the tobacco pouch;
- Fig. 13: the folded finished tobacco pouch with open first wrapping flap;
- Fig. 14: the tobacco pouch in the same state as fig. 13 in a roughly schematic vertical cut;
- Fig. 15: the tobacco pouch in a closed state in a roughly schematic vertical cut;
- Fig. 16: a laminate not according to the present invention, wherein (A) represents a perspective top view on the laminate and (B) shows a cross sectional view along the A - A axis of (A);
- Fig. 17: a first embodiment of the laminate of the present invention;
- Fig. 18: a second embodiment of the laminate of the present invention; and
- Fig. 19: a third embodiment of the laminate of the present invention.

In the below explanation of different exemplary embodiments, the same reference numbers are used for components with the same names.

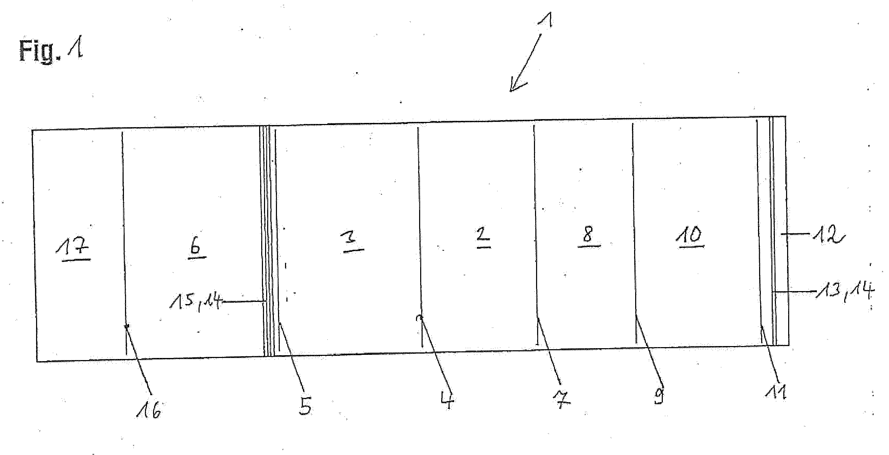

According to Fig. 1, a one-piece blank 1, for a tobacco pouch of the invention made of a flexible flat material comprising a laminate of the invention, comprises a front panel 2 and a back panel 3, which are connected with each other on a lower edge along a first lower folding line 4. On the upper edge of the back panel 3, a first wrapping flap 6 is connected with the back panel 3 via a first upper folding line 5.

The upper edge of the front panel 2 is connected with a first panel via a second further upper folding line 7. The first panel 8 is connected with a second panel 10 via a second lower folding line 9. The second panel 10 is connected with an upper front panel12 via a second upper folding line 11. A first element 13 of a plastic zip 14 is affixed on the upper front panel 12, for example through heat sealing.

At a short distance from the first upper folding line 5, a second element 15 of the plastic zip 14 is affixed to the inside of the first wrapping flap 6, e.g. through heat sealing. The two elements 13, 15 of the plastic zip 14 are complementary to each other so that they are interconnectable.

Finally, the first wrapping flap 6 on the outer edge is connected with a second wrapping flap 17 via a third lower folding line 16. It is preferably provided with an adhesive strip on the outside, which has a section protruding outward from the second wrapping flap 17, which can be repeatedly adhered to the flat material. This is hereby e.g. a pressure-sensitive adhesive.

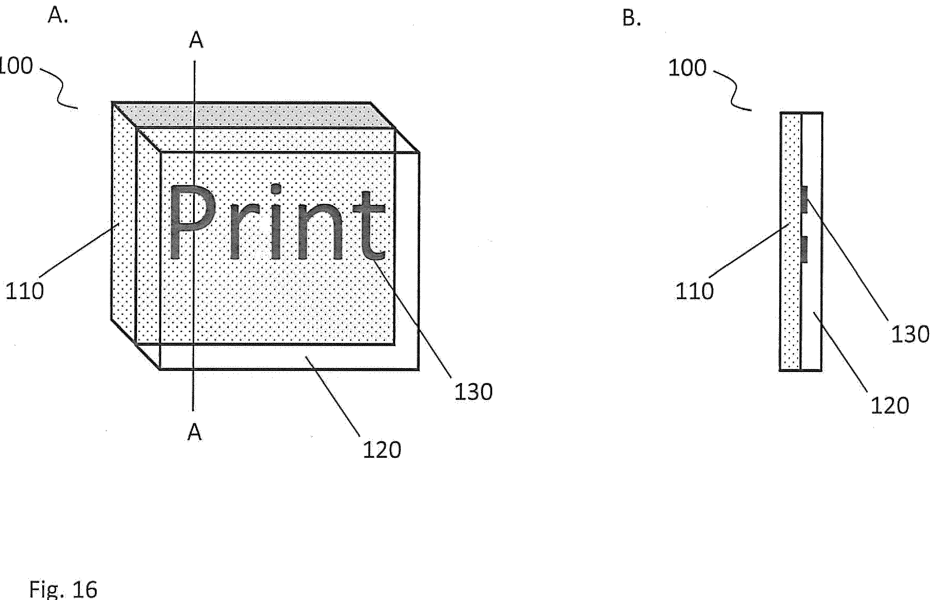

The blank 1 is made of a flexible flat material comprising or consisting of a laminate of the present invention, preferably of a laminate defined herein, in one of Figs. 16, 17, 18 or 19 or Table 1 or 2.

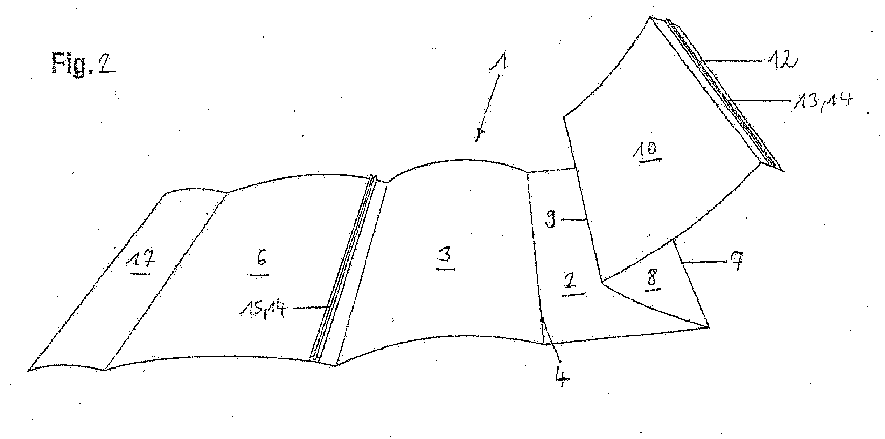

For assembling the tobacco pouch, according to Fig. 2, the first panel 8 can first be folded around the second upper folding line 7 against the front panel 2 and the second panel 10 around the second lower folding line 9 against the first panel 8.

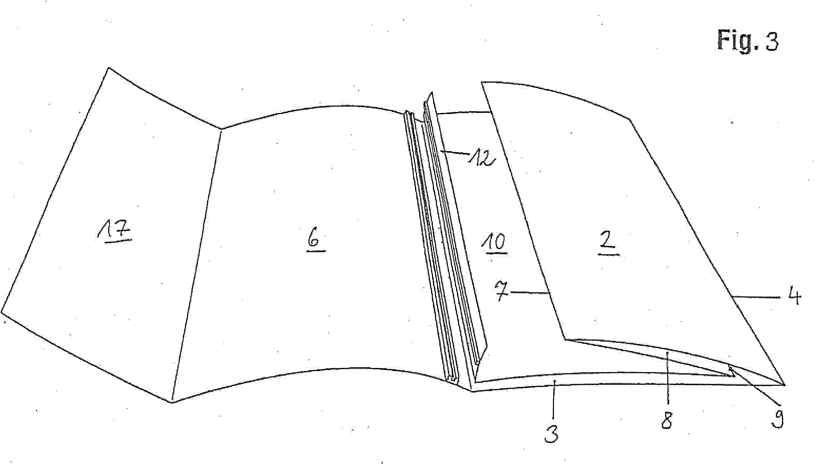

According to Fig. 3, the second panel 10 can then be folded against the inside of the back panel 3 and the upper front panel 12 against the outside of the second panel 10.

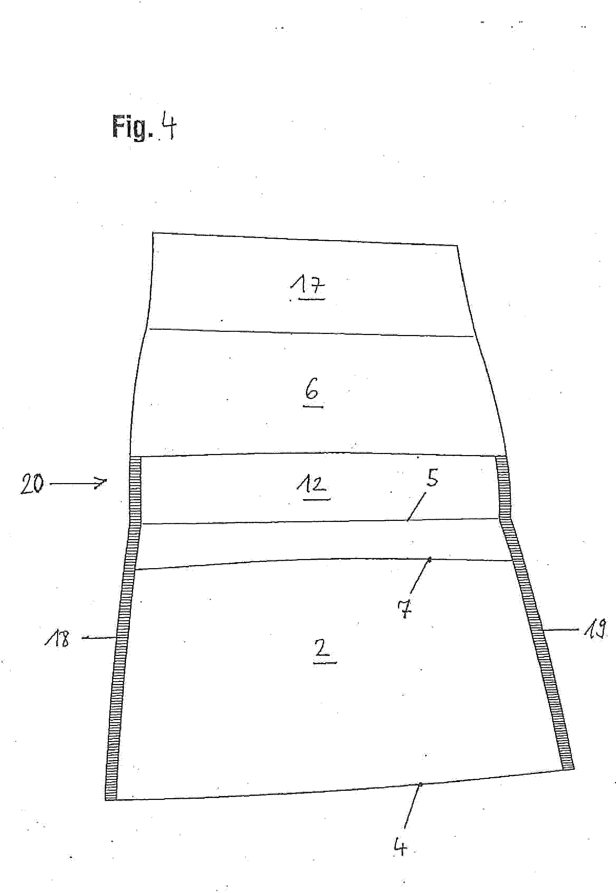

According to Fig. 4, the front panel 2, back panel 3 and the first and second panels 8, 10 are then connected with each other at the lateral edges through sealed seams 18, 19. The sealed seams 18, 19 extend up to the upper edge of the upper front panel 12 and include both ends of the elements 13, 15 of the plastic zip 14.

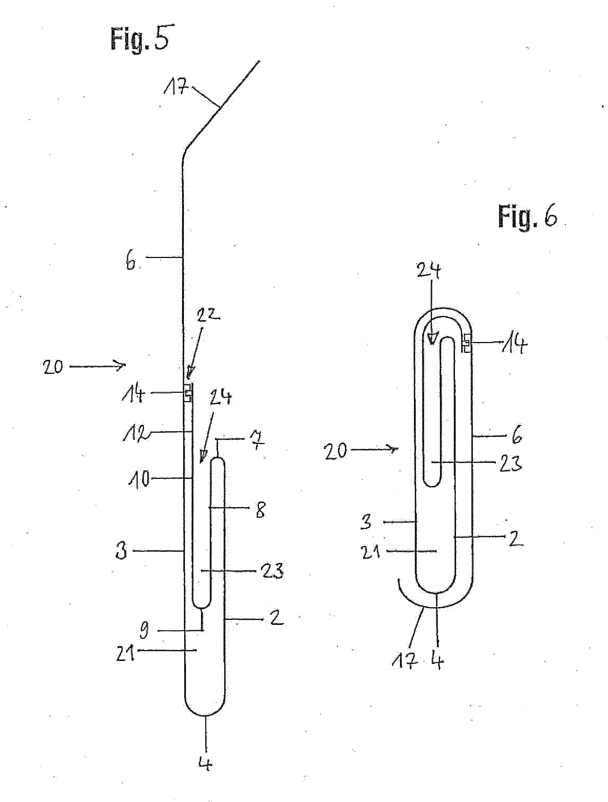

In this state, the tobacco pouch 20 according to Fig. 5 has a main compartment 21 with a main compartment opening 22 on the upper edge between front panel 2 and back panel 3, which is closed by the plastic zip 14. Furthermore, the tobacco pouch 20 has a secondary pouch 23 between the first and second panel 8, 10, which has a secondary compartment opening 24 on the top.

The main compartment 21 is fillable with loose tobacco and the secondary compartment 23 with utensils.

According to Fig. 6, the tobacco pouch 20 is completely closed, in that the first wrapping flap 6 together with the upper front panel 12 is folded against the outside of the front panel 2 and the second wrapping flap 17 is folded around the first lower folding line 4 so that its outer edge rests on the outside of the back panel 3. The second wrapping flap 17 can be affixed to the outside of the back panel 3 by means of an adhesive strip. The secondary compartment opening 24 is hereby closed.

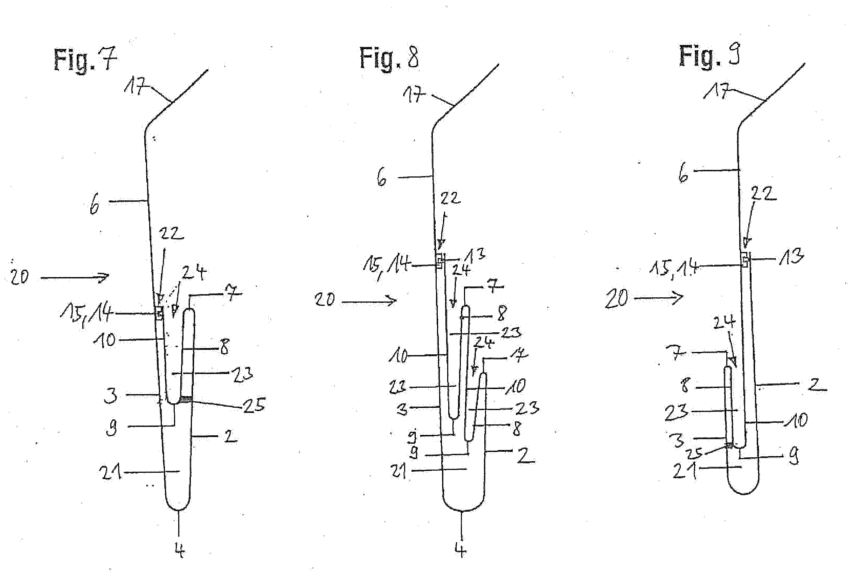

The design of Fig. 7 differs from the previously described design in that the second panel 10 of the secondary compartment 23 does not have an upper front panel12 and the plastic zip 14 is connected with the upper edge of the second panel 10 and the upper edge of the back panel 3.

As a result, the plastic zip 14 does not fold against the outside of the front panel 2 during closing of the first wrapping flap 6, but remains in the illustrated position.

The design of Fig. 8 differs from the design according to Fig. 1 to 6 in that two secondary compartments 23 are formed by two pairs of first and second panels 8, 10. In the case of the first pair, the first panel 8 is connected with the front panel 2 via a second upper folding line and the second panel with the first panel 8 via a second lower folding line 7. The first panel 8 of the second pair is connected with the upper edge of the second panel 10 of the first pair via a second upper folding line 7. The second panel 10 of the second pair is connected with the lower edge of the first panel 8 of the second pair via a second lower folding line 9. The second panel 10 of the second pair has an element 13 of the plastic zip 14 on the upper edge.

This design enables the separate storage of different utensils in separate secondary compartments 23.

The design of Fig. 9 differs from the design of Fig. 1 to 6 in that the secondary compartment 23 is arranged on the inside of the back panel 3. The first panel 8 of the secondary compartment 23 is connected with the upper edge of the back panel 3 via a second upper folding line 7. The second panel 10 of the secondary compartment 23 is connected with the lower edge of the first panel 8 via second lower folding line 9 and has an element 15 of the plastic zip 14 on the upper edge on the inside. The other element 13 of the plastic zip 14 is affixed to the upper edge of the front panel 2 on the inside of the front panel 2.

In the case of this design, the secondary compartment 23 is accessible from the outside even if the first wrapping flap 6 is closed.

Further embodiments of the tobacco pouch are provided with at least one secondary compartment 23 on the inside of front panel 2 according to any of figures 1 to 8 and a further secondary compartment 23 on the inside of back panel 3 according to figure 9.

Preferably, secondary compartments 23 are connected at their lower edge with a front panel 2, e. g. by a sealing seam as referenced in Fig. 7 by numeral 25, or with a back panel, e. g. by a sealing seam as referenced in Fig. 9 by numeral 25, to prevent tobacco from accumulating between the secondary compartment 23 and the front panel 2 or the back panel 3.

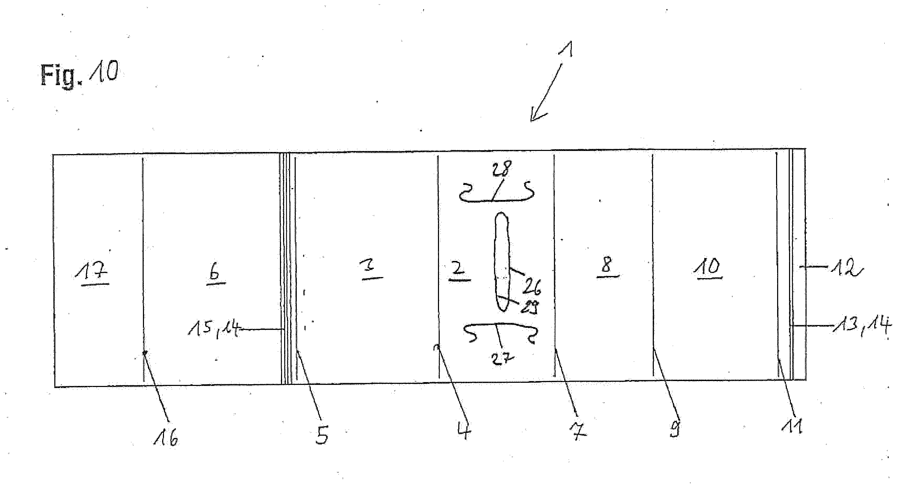

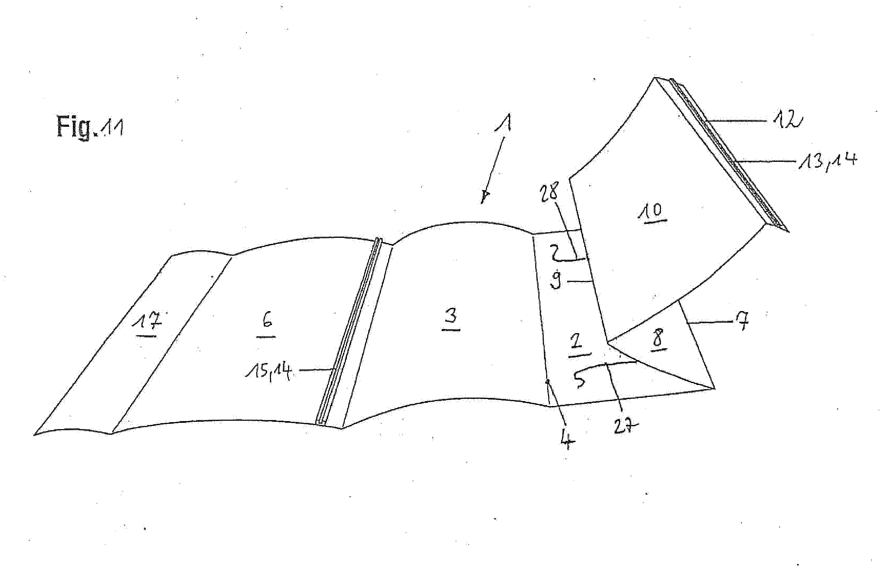

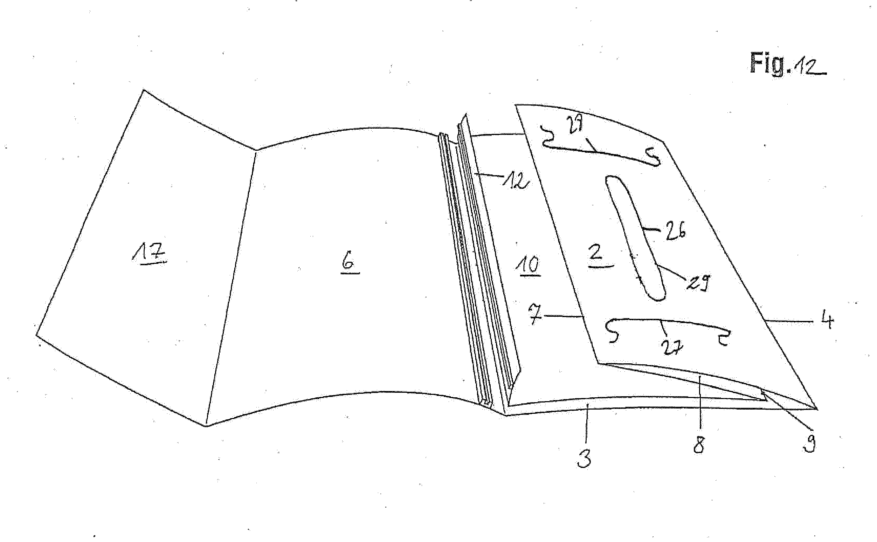

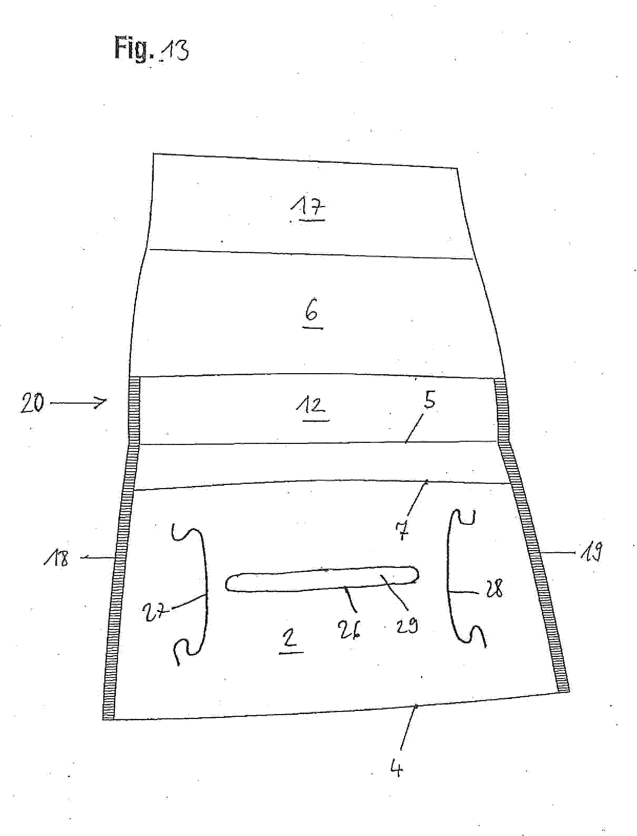

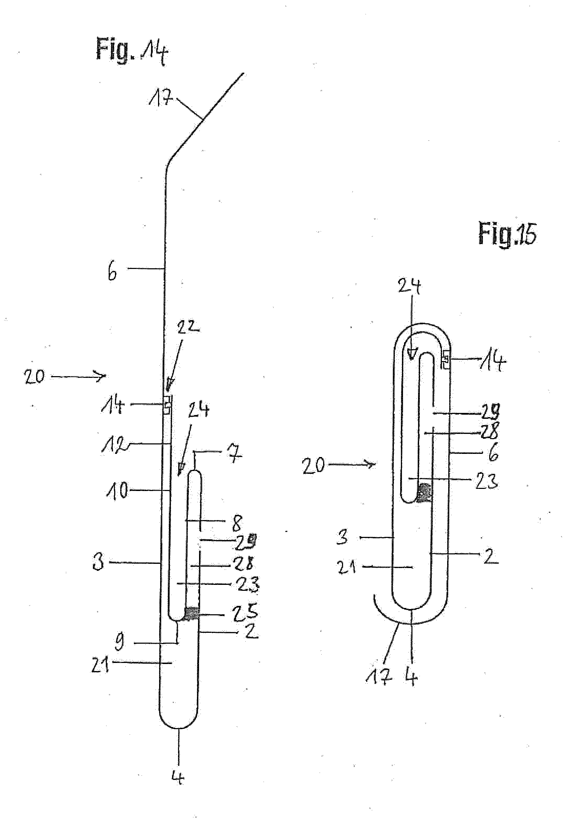

The design of Fig. 10 to 15 differs from the design of Fig. 7 in that the front panel 2 is provided with a horizontal slit 26 and vertical slits 27, 28 on both sides of the horizontal slit 26. The ends of the horizontal slit 26 and the ends of the vertical slits 28, 27 are rounded to prevent tearing thereof.

The length and width of the horizontal slit 26 corresponds to the length and width of an opening in a cigarette paper booklet for extracting single cigarette papers.

The height of the vertical slits 27, 28 corresponds or slightly exceeds the height of a cigarette paper booklet.

As shown in Fig. 10 to 13, the assembly of the tobacco pouch corresponds to an assembly of the tobacco pouch as described in Fig. 1 to 6.

Additionally, the tobacco pouch of figure 10 to 15 is provided with a sealing seam 25 between a secondary compartment 23 and front panel 2, in accordance with a design of Fig. 7. First panel 8, front panel 2, second upper folding line 7 and sealing seam 25 define a tertiary compartment 28. Tertiary compartment 28 is provided with a tertiary compartment opening 29. The tertiary compartment opening 29 consists of horizontal compartment opening 25 and vertical compartment openings 26, 27.

Utensils such as a cigarette paper booklet may be inserted through the vertical compartment openings 26, 27 into a tertiary compartment 28. Single cigarette papers may be extracted from the cigarette paper booklet through the horizontal compartment opening 25.

The tobacco pouch of the present invention is made from a flexible flat material which comprises or consists of a laminate 100 of a plurality of polymer layers, wherein the laminate 100 comprises or consists of an opaque inner layer 110, a transparent outer layer 120, one or more additional layers, wherein said one or more additional layers are each independently arranged between the opaque inner layer and the transparent outer layer and wherein the one or more additional layers each independently comprises or consists of polyethylene (PE), metallized polyethylene terephthalate (MPET), polypropylene (PP), cast polypropylene (CPP) or oriented polypropylene (OPP), and at least one printed element 130 arranged on or between an inward surface of the transparent outer layer 120 and an outward surface of the opaque inner layer 110.

The laminate of the invention can be used for any type of tobacco pouch wherein two outside surfaces of a flexible flat material are permanently sealed together to form a seam of the pouch. Preferably, the laminate of the invention is used for the tobacco pouch as defined in one of the Fig. 1 to 15.

In Fig. 16 a laminate 100 of the pouch not according to the present invention is shown. In Fig. 16A a perspective top view on the laminate 100 is provided, wherein in Fig. 16B a cross sectional view along the line A - A of the laminate 100 of Fig. 16A is shown. The laminate 100 comprises an opaque inner layer 110, a transparent outer layer 120 and a printed element 130, wherein the printed element 130 is arranged between an inward surface of the transparent outer layer 120 and an outward surface of the opaque inner layer 110. The printed element 130 is printed e.g. on the inward surface of the transparent outer layer 120 or on the outward surface of the opaque inner layer 110 of the laminate 100 or there may be printed elements 130 on both the transparent outer layer 120 and the outward surface of the opaque inner layer 110 of the laminate 100.

The opaque inner layer 110 may be formed of PE or MPET. The thickness of the opaque inner layer 110 is in the range of 5µm to 150µm, if the opaque inner layer 110 is made of PE, the thickness is preferably in the range of 20µm to 100µm. In case the printed element is printed onto an outward surface of the opaque inner layer 110 made of PE, the thickness of the opaque inner layer 110 is preferably in the range of 80µm to 100µm.

The transparent outer layer 120 can be formed of PE, PP, CPP or OPP. The thickness of the transparent outer layer 120 is in the range of 5µm to 150µm. Thickness of transparent outer layer is made as thin as possible to ensure transparency. However, if the transparent outer layer 120 is prepared of PE, the thickness is preferably in the range of 20µm to 50µm, whereas if the transparent outer layer 120 is made of CPP, the thickness is preferably in the range of 30µm to 80µm.

The following explicit examples are provided for the laminate 100 depicted in Fig. 16 and are summarized in Table 1.

**Table 1. Examples of the laminate 100, wherein a printed element 130 is present on the inward surface of the transparent outer layer 120 and/or on the outward surface of the opaque inner layer 110**

| Opaque inner layer 110 | | Transparent outer layer 120 | |
|---|---|---|---|
| material | Thickness (µm) | material | Thickness (µm) |
| PE | 80 - 100 | PE | 20 - 50 |
| PE | 80 | PE | 25 |
| PE | 20 - 100 | CPP | 30 - 80 |
| PE | 60 | CPP | 30 |
| PE | 70 | CPP | 30 |
| PE | 80 | CPP | 30 |
| PE | 20 - 60 | PE | 20 - 60 |

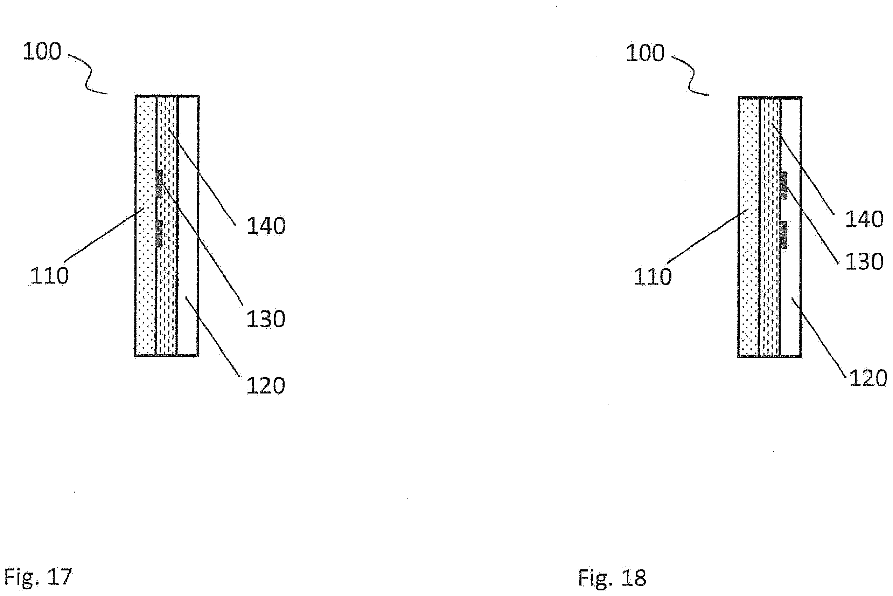

In Fig. 17 a first embodiment of the laminate 100 of the pouch of the present invention is shown. This first embodiment differs from the laminate of Fig. 16 in that the laminate 100 further comprises an additional layer 140 which is arranged between the opaque inner layer 110 and the transparent outer layer 120. In this embodiment of the laminate 100 a printed element is present on or between an outward surface of the opaque inner layer 110 and an inward surface of the additional layer 140 and the additional layer 140 is transparent.

In Fig. 18 a second embodiment of the laminate 100 of the pouch of the present invention is presented. This second embodiment differs from the laminate of Fig. 16 in that the laminate 100 further comprises an additional layer 140 which is arranged between the opaque inner layer 110 and the transparent outer layer 120. In this second embodiment of the laminate 100, a printed element is present on or between an outward surface of the additional layer 140 and an inward surface of the transparent outer layer 120. The additional layer 140 may be formed transparent or opaque.

The additional layer 140 of the first embodiment of the laminate 100 of Fig. 17 or of the second embodiment of the laminate 100 of Fig. 18 is made of PE, MPET, PP, CPP or OPP. The additional layer 140 has a thickness of 5µm to 150µm, preferably of 20µm to 100µm.

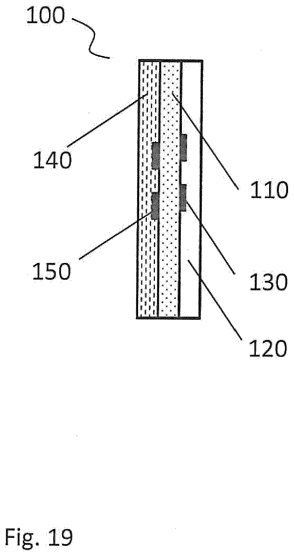

In Fig. 19 a third embodiment of the laminate 100 of the pouch of the invention is provided. This third embodiment differs from the laminate of Fig. 16 in that the laminate 100 further comprises an additional layer 140 which is arranged on an inward surface of the opaque inner layer 110. The additional layer 140 is formed to be transparent. The additional layer 140 has a thickness of 5µm to 150µm, preferably of 20µm to 100µm. A printed element 130 is arranged on or between an inward surface of the transparent outer layer 120 and an outward surface of the opaque inner layer 110, and, optionally, a second printed element 150 is arranged on or between an inward surface of the opaque inner layer 110 and an outward surface of the transparent additional layer 140. In this third embodiment of the laminate 100, the opaque inner layer 110 is preferably made of MPET and does not form the innermost layer of the laminate 100. The additional layer 140 of the third embodiment is preferably made of PE.

The following explicit examples are provided for the first, second and third embodiment of the laminate 100 depicted in Figs. 17, 18 and 19 and are summarized in Table 2.

**Table 2. Exemplary embodiments of the laminate 100 according to first, second and third embodiments depicted in Figs. 17, 18 and 19**

| Opaque inner layer 110 | | Additional layer 140 | | Transparent outer layer 120 | |
|---|---|---|---|---|---|
| material | thickness (µm) | material | thickness (µm) | material | thickness (µm) |
| PE | 20 - 60 | OPP | 20 - 100 | PE | 20 - 60 |
| PE | 50 | OPP | 20 | PE | 30 |
| PE | 40 | OPP | 20 | PE | 40 |
| MPET | 6 - 40 | PE | 20 - 60 | PE | 20 - 60 |
| MPET | 6 - 40 | PE | 20 - 60 | CPP | 20 - 60 |
| MPET | 12 | PE | 50 | PE | 40 |
| MPET | 12 | PE | 50 | CPP | 30 |

### List of References

- 1: Blank
- 2: Front panel
- 3: Back panel
- 4: First lower folding line
- 5: First upper folding line
- 6: First wrapping flap
- 7: Second upper folding line
- 8: First panel
- 9: Second lower folding line
- 10: Second panel
- 11: Second upper folding line
- 12: Upper front panel
- 13: First element
- 14: Plastic zip
- 15: Second element
- 16: Third lower folding line
- 17: Second wrapping flap
- 18: Sealed seam
- 19: Sealed seam
- 20: Tobacco pouch
- 21: Main compartment
- 22: Main compartment opening
- 23: Secondary compartment
- 24: Secondary compartment opening
- 25: Sealing Seam
- 26: Horizontal compartment opening
- 27: Vertical compartment opening
- 28: Vertical compartment opening
- 29: Tertiary compartment
- 30: Tertiary compartment opening
- 100: Laminate
- 110: Opaque inner layer
- 120: Transparent outer layer
- 130: Printed element
- 140: Additional layer
- 150: Second printed element

## Claims

1. Tobacco pouch comprising a main compartment to house tobacco, the pouch being made of a flexible flat material with an inner surface facing the interior of the main compartment and an outer surface facing the exterior of the main compartment, wherein the flexible flat material comprises a printed element visible from the exterior of the main compartment, and wherein two outside surfaces of the flexible flat material are permanently sealed together to form a seam of the pouch, wherein the flexible flat material comprises or consists of a laminate (100) of a plurality of polymer layers, wherein the laminate (100) comprises
an opaque inner layer (110);
a transparent outer layer (120);
one or more additional layers (140); and
a printed element (130) arranged on or between an inward surface of the transparent outer layer (120) and an outward surface of the opaque inner layer (110),
**characterized in that**
said one or more additional layers are each independently arranged between the opaque inner layer and the transparent outer layer and wherein the one or more additional layers each independently comprises or consists of polyethylene (PE), metallized polyethylene terephthalate (MPET), polypropylene (PP), cast polypropylene (CPP) or oriented polypropylene (OPP).

2. Tobacco pouch of claim 1, wherein the pouch comprises a front panel and a back panel defining the main compartment, and wherein at least one of the front panel and the back panel is made of the laminate (100), preferably the pouch is manufactured from a single blank comprising or consisting of the laminate (100).

3. Tobacco pouch of one of the preceding claims, wherein the opaque inner layer (110) comprises or consists of polyethylene (PE) or metallized polyethylene terephthalate (MPET).

4. Tobacco pouch of one of the preceding claims, wherein the opaque inner layer (110) has a thickness of 5 to 150µm, preferably of 20 to 100µm, more preferably of 60 to 80µm.

5. Tobacco pouch of one of the preceding claims, wherein the transparent outer layer (120) comprises or consists of polyethylene (PE), polypropylene (PP), cast polypropylene (CPP) or oriented polypropylene (OPP).

6. Tobacco pouch of one of the preceding claims, wherein the transparent outer layer (120) has a thickness of 5 to 150µm, preferably of 20 to 100µm, more preferably of 20 to 80µm.

7. Tobacco pouch of one of the preceding claims, wherein the laminate (100) comprises one or more further additional layers (140), said one or more further additional layers (140) are each independently arranged on an inward surface of the opaque inner layer (110).

8. Tobacco pouch of claim 7, wherein the one or more further additional layers (140) each independently comprises or consists of polyethylene (PE), metallized polyethylene terephthalate (MPET), polypropylene (PP), cast polypropylene (CPP) or oriented polypropylene (OPP).

9. Tobacco pouch of one of the preceding claims, wherein the one or more additional layers (140) each independently has a thickness of 5 to 150µm, more preferably of 20 to 100µm, even more preferably of 20 to 80µm.

10. Tobacco pouch of one of the preceding claims, wherein one or more additional layers (140) are arranged between the opaque inner layer (110) and the transparent outer layer (120), and wherein the printed element (130) is arranged on one of the surfaces of said additional layer (140).

11. Tobacco pouch of one of the preceding claims, wherein the innermost layer of the laminate (100) comprises or consists of PE.

12. Tobacco pouch of one of the preceding claims, wherein the laminate (100) comprises or consists of:
- an opaque inner layer (110) comprising or consisting of PE with a thickness of 80 to 100µm, a transparent outer layer (120) comprising or consisting of PE with a thickness of 20 to 50µm and a printed element (130) arranged on or between an inward surface of the transparent outer layer (120) and an outward surface of the opaque inner layer (110);
- an opaque inner layer (110) comprising or consisting of PE with a thickness of 20 to 100µm, a transparent outer layer (120) comprising or consisting of CPP with a thickness of 30 to 80µm, and a printed element (130) arranged on or between an inward surface of the transparent outer layer (120) and an outward surface of the opaque inner layer (110);
- an opaque inner layer (110) comprising or consisting of PE with a thickness of 20 to 100µm, a transparent outer layer (120) comprising or consisting of OPP with a thickness of 20 to 80µm, and a printed element (130) arranged on or between an inward surface of the transparent outer layer (120) and an outward surface of the opaque inner layer (110);
- an opaque inner layer (110) comprising or consisting of PE with a thickness of 20 to 60µm, a transparent outer layer (120) comprising or consisting of PE with a thickness of 20 to 60µm, an additional layer (140) arranged between the opaque inner layer (110) and the transparent outer layer (120) comprising or consisting of OPP with a thickness of 10 to 80µm, and a printed element (130) arranged on or between an inward surface of the transparent outer layer (120), an outward surface of the opaque inner layer (110), and a surface of the additional layer (140);
- an opaque inner layer (110) comprising or consisting of MPET with a thickness of 5 to 50µm, a transparent outer layer (120) comprising or consisting of CPP with a thickness of 20 to 60µm, an additional layer (140) arranged on an inward surface of the opaque inner layer (110) comprising or consisting of PE with a thickness of 20 to 60µm, and a printed element (130) arranged on or between an inward surface of the transparent outer layer (120) and an outward surface of the opaque inner layer (110); or
- an opaque inner layer (110) comprising or consisting of MPET with a thickness of 5 to 50µm, a transparent outer layer (120) comprising or consisting of CPP with a thickness of 20 to 60µm, an additional layer (140) arranged on an inward surface of the opaque inner layer (110) comprising or consisting of PE with a thickness of 20 to 60µm, the additional layer (140) being transparent, a printed element (130) arranged on or between an inward surface of the transparent outer layer (120) and an outward surface of the opaque inner layer (110), and a second printed element (150) arranged on or between an inward surface of the opaque inner layer (110) and an outward surface of the transparent additional layer (140).

13. Tobacco pouch of one of the preceding claims, wherein the pouch is made of flexible flat material with a front panel (2) and a back panel (3), which are folded against each other on the lower edge around a first lower folding line (4) and are connected with each other at the two lateral edges and include a main compartment (21) for tobacco, which is accessible from the outside through a main compartment opening (22) between the upper edges of the front panel (2) and the back panel (3), a first wrapping flap (6) connected with the upper edge of the back panel (3) and foldable towards the front panel (2), an arrangement of a first panel (8) and a second panel (10) being provided which are folded against each other around a second folding line (9) and are connected with each other at both lateral edges and define a secondary compartment (23) which is accessible through a secondary compartment opening (24), **characterized in that** the secondary compartment (23) is formed between the first and second panel (8, 10) which are folded around a second folding line (9) at their lower edge, so that the secondary compartment is inside of the front panel (2) and the back panel (3).

14. Tobacco pouch according to claim 13, wherein the front panel (2), the back panel (3) and the first and second panels (8, 10) of the secondary compartment (23) are connected with each other at both lateral edges through seams (18, 19).

15. Tobacco pouch according to claim 13 or 14, wherein the first panel (8) is connected with the upper edge of the front panel (2) via a second upper folding line (7) and/or in which the first panel (8) is connected with the upper edge of the back panel (3) via a second upper folding line (7).

16. Tobacco pouch according to one of claims 13 to 15, wherein several secondary compartments (23) are formed through several arrangements of overlapping first and second panels (8, 10), wherein the first and second panels (8, 10) of each arrangement are connected with each other at the lower edge through a second lower folding line (9) and neighboring first and second panels (8, 10) of different arrangements at the upper edge are connected with each other through a second upper folding line (7).

17. Tobacco pouch according to one of claims 13 to 16, wherein a secondary compartment (23) arranged on the inside of the front panel (2) is connected by connection (25) with the front panel (2) or with the back panel (3) at the lower edge.

## Patentansprüche

1. Tabakbeutel, der ein Hauptfach umfasst, um Tabak aufzunehmen, wobei der Beutel aus einem flexiblen flachen Material hergestellt ist, mit einer inneren Oberfläche, die dem Inneren des Hauptfachs zugewandt ist, und einer äußeren Oberfläche, die der Umgebung des Hauptfachs zugewandt ist, wobei das flexible flache Material ein gedrucktes Element umfasst, das von außerhalb der Hauptkammer sichtbar ist, und wobei zwei Außenflächen des flexiblen flachen Materials dauerhaft miteinander verbunden sind, um eine Naht des Beutels auszubilden, wobei das flexible flache Material ein Laminat (100) aus einer Mehrzahl von Polymerlagen umfasst oder daraus besteht, wobei das Laminat (100) Folgendes umfasst:
eine opake innere Lage (110);
eine transparente äußere Lage (120);
eine oder mehrere zusätzliche Lagen (140);
und
ein gedrucktes Element (130), das auf oder zwischen einer nach innen weisenden Oberfläche der transparenten äußeren Lage (120) und einer nach außen weisenden Oberfläche der undurchsichtigen inneren Lage (110) angeordnet ist, **dadurch, gekennzeichnet, dass**
die eine oder mehreren zusätzlichen Lagen jeweils unabhängig zwischen der opaken inneren Lage und der transparenten äußeren Lage angeordnet sind und wobei die eine oder mehreren zusätzlichen Lagen jeweils unabhängig Polyethylen (PE), metallisiertes Polyethylenterephthalat (MPET), Polypropylen (PP), gegossenes Polypropylen (CPP) oder orientiertes Polypropylen (OPP) umfasst oder daraus besteht.

2. Tabakbeutel nach Anspruch 1, wobei der Beutel ein vorderes Flächengebilde und ein hinteres Flächengebilde umfasst, die das Hauptfach definieren, und wobei mindestens eines aus dem vorderen Flächengebilde und dem hinteren Flächengebilde aus dem Laminat (100) hergestellt ist, wobei der Beutel vorzugsweise aus einem einzigen Zuschnitt gefertigt ist, der das Laminat (100) umfasst oder daraus besteht.

3. Tabakbeutel nach einem der vorangehenden Ansprüche, wobei die opake innere Lage (110) Polyethylen (PE) oder metallisiertes Polyethylenterephthalat (MPET) umfasst oder daraus besteht.

4. Tabakbeutel nach einem der vorangehenden Ansprüche, wobei die opake innere Lage (110) eine Dicke von 5 bis 150 µm, vorzugsweise von 20 bis 100 µm, besonders bevorzugt von 60 bis 80 µm, aufweist.

5. Tabakbeutel nach einem der vorangehenden Ansprüche, wobei die transparente äußere Lage (120) Polyethylen (PE), Polypropylen (PP), gegossenes Polypropylen (CPP) oder orientiertes Polypropylen (OPP) umfasst oder daraus besteht.

6. Tabakbeutel nach einem der vorangehenden Ansprüche, wobei die transparente äußere Lage (120) eine Dicke von 5 bis 150 µm, vorzugsweise von 20 bis 100 µm, besonders bevorzugt von 20 bis 80 µm, aufweist.

7. Tabakbeutel nach einem der vorangehenden Ansprüche, wobei das Laminat (100) eine oder mehrere weitere zusätzliche Lagen (140) umfasst, wobei die eine oder mehreren weiteren zusätzlichen Lagen (140) jeweils unabhängig auf einer nach innen weisenden Oberfläche der opaken inneren Lage angeordnet sind.

8. Tabakbeutel nach Anspruch 7, wobei die eine oder mehreren weiteren zusätzlichen Lagen (140) jeweils unabhängig Polyethylen (PE), metallisiertes Polyethylenterephthalat (MPET), Polypropylen (PP), gegossenes Polypropylen (OPP) oder orientiertes Polypropylen (OPP) umfassen oder daraus bestehen.

9. Tabakbeutel nach einem der vorangehenden Ansprüche, wobei die eine oder mehreren zusätzlichen Lagen (140) jeweils unabhängig eine Dicke von 5 bis 150 µm, besonders bevorzugt von 20 bis 100 µm, ganz besonders bevorzugt von 20 bis 80 µm, aufweisen.

10. Tabakbeutel nach einem der vorangehenden Ansprüche, wobei eine oder mehrere zusätzliche Lagen (140) zwischen der opaken inneren Lage (110) und der transparenten äußeren Lage (120) angeordnet sind und wobei das gedruckte Element (130) auf einer der Oberflächen der zusätzlichen Lage (140) angeordnet ist.

11. Tabakbeutel nach einem der vorangehenden Ansprüche, wobei die innerste Lage des Laminats (100) PE umfasst oder daraus besteht.

12. Tabakbeutel nach einem der vorangehenden Ansprüche, wobei das Laminat (100) Folgendes umfasst oder daraus besteht:
- eine opake innere Lage (110), die PE mit einer Dicke von 80 bis 100 µm umfasst oder daraus besteht, eine transparente äußere Lage (120), die PE mit einer Dicke von 20 bis 50 µm umfasst oder daraus besteht, und ein gedrucktes Element (130), das auf oder zwischen einer nach innen weisenden Oberfläche der transparenten äußeren Lage (120) und einer nach außen weisenden Oberfläche der opaken inneren Lage (110) angeordnet ist;
- eine opake innere Lage (110), die PE mit einer Dicke von 20 bis 100 µm umfasst oder daraus besteht, eine transparente äußere Lage (120), die CPP mit einer Dicke von 30 bis 80 µm umfasst oder daraus besteht, und ein gedrucktes Element (130), das auf oder zwischen einer nach innen weisenden Oberfläche der transparenten äußeren Lage (120) und einer nach außen weisenden Oberfläche der opaken inneren Lage (110) angeordnet ist;
- eine opake innere Lage (110), die PE mit einer Dicke von 20 bis 100 µm umfasst oder daraus besteht, eine transparente äußere Lage (120), die OPP mit einer Dicke von 20 bis 80 µm umfasst oder daraus besteht, und ein gedrucktes Element (130), das auf oder zwischen einer nach innen weisenden Oberfläche der transparenten äußeren Lage (120) und einer nach außen weisenden Oberfläche der opaken inneren Lage (110) angeordnet ist;
- eine opake innere Lage (110), die PE mit einer Dicke von 20 bis 60 µm umfasst oder daraus besteht, eine transparente äußere Lage (120), die PE mit einer Dicke von 20 bis 60 µm umfasst oder daraus besteht, eine zusätzliche Lage (140), die zwischen der opaken inneren Lage (110) und der transparenten äußeren Lage (120) angeordnet ist und OPP mit einer Dicke von 10 bis 80 µm umfasst oder daraus besteht, und ein gedrucktes Element (130), das auf oder zwischen einer nach innen weisenden Oberfläche der transparenten äußeren Lage (120), einer nach außen weisenden Oberfläche der opaken inneren Lage (110) und einer Oberfläche der zusätzlichen Lage (140) angeordnet ist;
- eine opake innere Lage (110), die MPET mit einer Dicke von 5 bis 50 µm umfasst oder daraus besteht, eine transparente äußere Lage (120), die CPP mit einer Dicke von 20 bis 60 µm umfasst oder daraus besteht, eine zusätzliche Lage (140), die auf einer nach innen weisenden Oberfläche der opaken inneren Lage (110) angeordnet ist und PE mit einer Dicke von 20 bis 60 µm umfasst oder daraus besteht, und ein gedrucktes Element (130), das auf oder zwischen einer nach innen weisenden Oberfläche der transparenten äußeren Lage (120) und einer nach außen weisenden Oberfläche der opaken inneren Lage (110) angeordnet ist; oder
- eine opake innere Lage (110), die MPET mit einer Dicke von 5 bis 50 µm umfasst oder daraus besteht, eine transparente äußere Lage (120), die CPP mit einer Dicke von 20 bis 60 µm umfasst oder daraus besteht, eine zusätzliche Lage (140), die auf einer nach innen weisenden Oberfläche der opaken inneren Lage (110) angeordnet ist und PE mit einer Dicke von 20 bis 60 µm umfasst oder daraus besteht, wobei die zusätzlichen Lage (140) transparent ist, ein gedrucktes Element (130), das auf oder zwischen einer nach innen weisenden Oberfläche der transparenten äußeren Lage (120) und einer nach außen weisenden Oberfläche der opaken inneren Lage (110) angeordnet ist, und ein zweites gedrucktes Element (150), das auf oder zwischen einer nach innen weisenden Oberfläche der opaken inneren Lage (110) und einer nach außen weisenden Oberfläche der transparenten zusätzlichen Lage (140) angeordnet ist.

13. Tabakbeutel nach einem der vorangehenden Ansprüche, wobei der Beutel aus flexiblem flachem Material hergestellt ist, mit einem vorderen Flächengebilde (2) und einem hinteren Flächengebilde (3), die am unteren Rand um eine erste untere Faltlinie (4) herum gegeneinander gefaltet sind und an den zwei seitlichen Rändern miteinander verbunden sind und ein Hauptfach (21) für Tabak enthalten, das von außen über eine Hauptfachöffnung (22) zwischen den oberen Rändern des vorderen Flächengebildes (2) und des hinteren Flächengebildes (3) zugänglich ist, einer ersten Verpackungslasche (6), die mit dem oberen Rand des hinteren Flächengebildes (3) verbunden und zu dem vorderen Flächengebilde (2) hin faltbar ist, wobei eine Anordnung aus einem ersten Flächengebilde (8) und einem zweiten Flächengebilde (10) vorgesehen ist, die um eine zweite Faltlinie (9) herum gegeneinander gefaltet sind und an beiden seitlichen Rändern miteinander verbunden sind und ein Sekundärfach (23) definieren, das über eine Sekundärfachöffnung (24) zugänglich ist, **dadurch gekennzeichnet, dass** das Sekundärfach (23) zwischen dem ersten und zweiten Flächengebilde (8, 10) ausgebildet ist, die an ihrem unteren Rand um eine zweite Faltlinie (9) herum gefaltet sind, sodass das Sekundärfach sich innerhalb des vorderen Flächengebildes (2) und des hinteren Flächengebildes (3) befindet.

14. Tabakbeutel nach Anspruch 13, wobei das vordere Flächengebilde (2), das hintere Flächengebilde (3) und das erste und zweite Flächengebilde (8, 10) des Sekundärfachs (23) an beiden seitlichen Rändern über Nähte (18, 19) miteinander verbunden sind.

15. Tabakbeutel nach Anspruch 13 oder 14, wobei das erste Flächengebilde (8) über eine zweite obere Faltlinie (7) mit dem oberen Rand des vorderen Flächengebildes (2) verbunden ist und/oder wobei das erste Flächengebilde (8) über eine zweite obere Faltlinie (7) mit dem oberen Rand des hinteren Flächengebildes (3) verbunden ist.

16. Tabakbeutel nach einem der Ansprüche 13 bis 15, wobei mehrere Sekundärfächer (23) durch mehrere Anordnungen von überlappenden ersten und zweiten Flächengebilden (8, 10) ausgebildet sind, wobei das erste und zweite Flächengebilde (8, 10) jeder Anordnung am unteren Rand über eine zweite untere Faltlinie (9) miteinander verbunden sind und benachbarte erste und zweite Flächengebilde (8, 10) verschiedener Anordnungen am oberen Rand über eine zweite obere Faltlinie (7) miteinander verbunden sind.

17. Tabakbeutel nach einem der Ansprüche 13 bis 16, wobei ein Sekundärfach (23), das auf der Innenseite des vorderen Flächengebildes (2) angeordnet ist, am unteren Rand durch Verbindung (25) mit dem vorderen Flächengebilde (2) oder mit dem hinteren Flächengebilde (3) verbunden ist.

## Revendications

1. Blague à tabac comprenant un compartiment principal destiné à recevoir du tabac, la blague étant fabriquée en un matériau plat flexible doté d'une surface intérieure orientée vers l'intérieur du compartiment principal et d'une surface extérieure orientée vers l'extérieur du compartiment principal, le matériau plat flexible comprenant un élément imprimé visible de l'extérieur du compartiment principal, et deux surfaces extérieures du matériau plat flexible étant reliées de manière permanente pour former une couture de la blague, le matériau plat flexible comprenant ou étant constitué d'un complexe (100) d'une pluralité de couches de polymère, le complexe (100) comprenant
une couche intérieure opaque (110) ;
une couche extérieure transparente (120) ;
une ou plusieurs couches supplémentaires (140) ;
et
un élément imprimé (130) agencé sur ou entre une surface intérieure de la couche extérieure transparente (120) et une surface extérieure de la couche intérieure opaque (110),
**caractérisée en ce que**
lesdites une ou plusieurs couches supplémentaires sont agencées indépendamment les unes des autres entre la couche intérieure opaque et la couche extérieure transparente, et l'une ou plusieurs couches supplémentaires comprenant ou étant constituées indépendamment les unes des autres de polyéthylène (PE), de polyéthylène téréphtalate métallisé (MPET), de polypropylène (PP), de polypropylène cast (CPP) ou de polypropylène orienté (OPP).

2. Blague à tabac selon la revendication 1, dans laquelle la blague comprend un panneau avant et un panneau arrière définissant le compartiment principal, et dans laquelle au moins un des panneaux avant et arrière est fabriqué du complexe (100), la blague est de préférence fabriquée à partir d'une ébauche unique comprenant ou constituée du complexe (100).

3. Blague à tabac selon l'une des revendications précédentes, dans laquelle la couche intérieure opaque (110) comprend ou est constituée de polyéthylène (PE) ou de polyéthylène téréphtalate métallisé (MPET).

4. Blague à tabac selon l'une des revendications précédentes, dans laquelle la couche intérieure opaque (110) présente une épaisseur de 5 à 150 µm, de préférence de 20 à 100 µm, mieux encore de 60 à 80 µm.

5. Blague à tabac selon l'une des revendications précédentes, dans laquelle la couche extérieure transparente (120) comprend ou est constituée de polyéthylène (PE), de polypropylène (PP), de polypropylène cast (CPP) ou de polypropylène orienté (OPP).

6. Blague à tabac selon l'une des revendications précédentes, dans laquelle la couche extérieure transparente (120) présente une épaisseur de 5 à 150 µm, de préférence de 20 à 100 µm, mieux encore de 20 à 80 µm.

7. Blague à tabac selon l'une des revendications précédentes, dans laquelle le complexe (100) comprend une ou plusieurs autres couches supplémentaires (140), lesdites une ou plusieurs autres couches supplémentaires (140) étant agencées indépendamment les unes des autres sur une surface intérieure de la couche intérieure opaque (110).

8. Blague à tabac selon la revendication 7, dans laquelle l'une ou plusieurs autres couches supplémentaires (140) comprennent ou sont constituées indépendamment les unes des autres de polyéthylène (PE), de polyéthylène téréphtalate métallisé (MPET), de polypropylène (PP), de polypropylène cast (CPP) ou de polypropylène orienté (OPP).

9. Blague à tabac selon l'une des revendications précédentes, dans laquelle l'une ou plusieurs couches supplémentaires (140) présentent indépendamment les unes des autres une épaisseur de 5 à 150 µm, de préférence de 20 à 100 µm, mieux encore de 20 à 80 µm.

10. Blague à tabac selon l'une des revendications précédentes, dans laquelle une ou plusieurs couches supplémentaires (140) sont agencées entre la couche intérieure opaque (110) et la couche extérieure transparente (120), et dans laquelle l'élément imprimé (130) est agencé sur l'une des surfaces de ladite couche supplémentaire (140).

11. Blague à tabac selon l'une des revendications précédentes, dans laquelle la couche la plus à l'intérieur du complexe (100) comprend ou est constituée de PE.

12. Blague à tabac selon l'une des revendications précédentes, dans laquelle le complexe (100) comprend ou est constitué de :
- une couche intérieure opaque (110) comprenant ou constituée de PE, ayant une épaisseur de 80 à 100 µm, une couche extérieure transparente (120) comprenant ou constituée de PE, ayant une épaisseur de 20 à 50 µm, et un élément imprimé (130) agencé sur ou entre une surface intérieure de la couche extérieure transparente (120) et une surface extérieure de la couche intérieure opaque (110) ;
- une couche intérieure opaque (110) comprenant ou constituée de PE, ayant une épaisseur de 20 à 100 µm, une couche extérieure transparente (120) comprenant ou constituée de CPP, ayant une épaisseur de 30 à 80 µm, et un élément imprimé (130) agencé sur ou entre une surface intérieure de la couche extérieure transparente (120) et une surface extérieure de la couche intérieure opaque (110) ;
- une couche intérieure opaque (110) comprenant ou constituée de PE, ayant une épaisseur de 20 à 100 µm, une couche extérieure transparente (120) comprenant ou constituée d'OPP, ayant une épaisseur de 20 à 80 µm, et un élément imprimé (130) agencé sur ou entre une surface intérieure de la couche extérieure transparente (120) et une surface extérieure de la couche intérieure opaque (110) ;
- une couche intérieure opaque (110) comprenant ou constituée de PE, ayant une épaisseur de 20 à 60 µm, une couche extérieure transparente (120) comprenant ou constituée de PE, ayant une épaisseur de 20 à 60 µm, une couche supplémentaire (140) agencée entre la couche intérieure opaque (110) et la couche extérieure transparente (120) comprenant ou constituée d'OPP, ayant une épaisseur de 10 à 80 µm, et un élément imprimé (130) agencé sur ou entre une surface intérieure de la couche extérieure transparente (120), une surface extérieure de la couche intérieure opaque (110) et une surface de la couche supplémentaire (140) ;
- une couche intérieure opaque (110) comprenant ou constituée de MPET, ayant une épaisseur de 5 à 50 µm, une couche extérieure transparente (120) comprenant ou constituée de CPP, ayant une épaisseur de 20 à 60 µm, une couche supplémentaire (140) agencée sur une surface intérieure de la couche intérieure opaque (110) comprenant ou constituée de PE, ayant une épaisseur de 20 à 60 µm, et un élément imprimé (130) agencé sur ou entre une surface intérieure de la couche extérieure transparente (120) et une surface extérieure de la couche intérieure opaque (110) ; ou
- une couche intérieure opaque (110) comprenant ou constituée de MPET, ayant une épaisseur de 5 à 50 µm, une couche extérieure transparente (120) comprenant ou constituée de CPP, ayant une épaisseur de 20 à 60 µm, une couche supplémentaire (140) agencée sur une surface intérieure de la couche intérieure opaque (110) comprenant ou constituée de PE, ayant une épaisseur de 20 à 60 µm, la couche supplémentaire (140) étant transparente, un élément imprimé (130) agencé sur ou entre une surface intérieure de la couche extérieure transparente (120) et une surface extérieure de la couche intérieure opaque (110), et un second élément imprimé (150) agencé sur ou entre une surface intérieure de la couche intérieure opaque (110) et une surface extérieure de la couche supplémentaire (140) transparente.

13. Blague à tabac selon l'une des revendications précédentes, dans laquelle la blague est fabriquée en un matériau plat flexible doté d'un panneau avant (2) et d'un panneau arrière (3), qui sont pliés l'un contre l'autre sur le bord inférieur sur une première ligne de pliage inférieure (4) et qui sont reliés l'un à l'autre sur les deux bords latéraux et comportent un compartiment principal (21) pour du tabac, qui est accessible depuis l'extérieur par une ouverture (22) du compartiment principal entre les bords supérieurs du panneau avant (2) et du panneau arrière (3), un premier rabat d'enveloppement (6) relié au bord supérieur du panneau arrière (3) et pliable vers le panneau avant (2), un agencement d'un premier panneau (8) et d'un second panneau (10) étant prévu, lesquels sont pliés l'un contre l'autre sur une seconde ligne de pliage (9) et sont reliés l'un à l'autre sur les deux bords latéraux et définissent un compartiment secondaire (23) qui est accessible par une ouverture (24) du compartiment secondaire, **caractérisée en ce que** le compartiment secondaire (23) est formé entre le premier et le second panneau (8, 10), qui sont pliés sur une seconde ligne de pliage (9) sur leur bord inférieur, de sorte que le compartiment secondaire est à l'intérieur du panneau avant (2) et du panneau arrière (3).

14. Blague à tabac selon la revendication 13, dans laquelle le panneau avant (2), le panneau arrière (3) et les premier et second panneaux (8, 10) du second compartiment (23) sont reliés les uns aux autres sur les deux bords latéraux par des coutures (18, 19).

15. Blague à tabac selon la revendication 13 ou 14, dans laquelle le premier panneau (8) est relié au bord supérieur du panneau avant (2) par le biais d'une seconde ligne de pliage supérieure (7) et/ou dans laquelle le premier panneau (8) est relié au bord supérieur du panneau arrière (3) par le biais d'une seconde ligne de pliage supérieure (7).

16. Blague à tabac selon l'une des revendications 13 à 15, dans laquelle plusieurs compartiments secondaires (23) sont formés par plusieurs agencements de premiers et seconds panneaux (8, 10) se chevauchant, le premier et second panneau (8, 10) de chaque agencement étant reliés l'un à l'autre sur le bord inférieur par une seconde ligne de pliage inférieure (9) et des premier et second panneaux (8, 10) adjacents de différents agencements sur le bord supérieur étant reliés les uns aux autres par une seconde ligne de pliage supérieure (7).

17. Blague à tabac selon l'une des revendications 13 à 16, dans laquelle un compartiment secondaire (23) agencé sur l'intérieur du panneau avant (2) est relié par la liaison (25) au panneau avant (2) ou au panneau arrière (3) sur le bord inférieur.
